# EUROPÄISCHE PATENTSCHRIFT

(11) **EP 2 178 382 B1**
(45) Veröffentlichungstag und Bekanntmachung des Hinweises auf die Patenterteilung: **19.12.2012**
(21) Anmeldenummer: 08803028.3
(22) Anmeldetag: 14.08.2008
(51) Int. Cl.: A22B 7/00, F25D 25/04

(54) **HYGIENISCHES ENTFEUCHTEN VON SCHLACHTWARMEN TIERKÖRPERN**
HYGIENIC DEHUMIDIFICATION OF ANIMAL CARCASSES WARM FROM SLAUGHTER
DÉSHUMIDIFICATION HYGIÉNIQUE DE CARCASSES ENCORE CHAUDES D'ANIMAUX ABATTUS

(30) Priorität: 16.08.2007 DE 102007038815
(43) Veröffentlichungstag der Anmeldung: 28.04.2010
(73) Patentinhaber: Promethon AG, 6343 Rotkreuz (CH)
(72) Erfinder: WIECK, Richard, 33397 Rietberg (DE)
(74) Vertreter: Busse & Busse
(86) Internationale Anmeldenummer: PCT/EP2008/060669
(87) Internationale Veröffentlichungsnummer: WO 2009/021983

(56) Entgegenhaltungen:
- DD-B- 155 031
- GB-A- 2 356 792
- US-A- 3 769 807

## Beschreibung

Die Erfindung betrifft ein Verfahren und eine Vorrichtung zur Behandlung von Körpern geschlachteter Tiere während der hängenden Beförderung nach dem Ausweiden und vor dem Wiegen in einem Schlachthof mittels eines Luftstromes.

Beim typischen Schlachtprozess wird nach der Betäubung der Rumpf der Tiere im reinen Bereich an einen durch die Hinterbeine geführten Haken gehängt. Auf diese Weise wird der Körper über ein Deckenfördersystem (Hängebahnen) durch den restlichen Schlachtprozess transportiert. Während des sauberen Ausweidungsverfahrens wird der Brustkörper gespalten und die Gedärme werden entnommen. Die einzeln abgetrennten Innereien begleiten den Rumpf parallel zum tierärztlichen Dienst, wo sie untersucht werden. Teile, die irgendwelche Anzeichen von Krankheiten aufweisen, werden ausgesondert. Anschließend wird der Rumpf an Wirbelsäule und Brust halbiert.

Der Rumpf wird gewogen, um das tatsächliche Schlachtgewicht zu bestimmen (Rumpf ohne Blut und Gedärme) und dann in die Kühlbereiche transportiert. Direkt nach dem Schlachten beträgt die normale Temperatur des Rumpfes etwa 37 °C - 40°C und muss innerhalb von 24 Stunden auf 7°C abgekühlt werden.

Das Abkühlen ist erforderlich, um das Wachstum von Bakterien zu unterbinden. Der Rumpf wird abgekühlt, indem er z. B. mit gekühlter Luft (-20 °C bis -30 °C) angeblasen wird. Die Oberfläche kühlt ab, im Innern ist der Rumpf jedoch noch warm. Anschließend erfolgt der Transport in einen Kühlbereich, in dem die Umgebungstemperatur auf 5 °C gehalten wird. Hier wird der Rumpf bis zum nächsten Tag gelagert, so dass die innere Temperatur den erforderlichen Wert erreicht.

Es ist üblich geschlachtete Tiere artspezifisch zu reinigen. Die Schlachttierkörper müssen während des technologischen Schlachtprozesses aus hygienischen Gründen gereinigt werden. Dieser technologische Reinigungsprozess ist der Spezifik des zu schlachtenden Tierkörpers angepasst. Dies kann z. B. eine einfache Nassreinigung nach Enthäuten, Brühen bzw. Bedampfen mit anschließender Enthaarung bzw. Entborstung oder Entfernung der Federn des Tierkörpers sein. Sodann werden die Körper ausgeweidet und durchlaufen vor dem Wiegen eine Nachtropfstrecke.

Aus der Druckschrift DD-B 155 031 ist ein Verfahren zur Senkung von Schwundverlusten bei Schlachttierkörperwarmmassen, insbesondere bei Rinderteilstücken bekannt, bei denen die Schlachttierkörperteilstücke unmittelbar nach der Nassreinigung, aber vor dem Wiegen mittels Luft von Umgebungstemperatur oberflächentrocken geduscht werden, um danach kältebehandelt zu werden.

Zur Durchführung des Verfahrens soll eine Vorrichtung verwendet werden, umfassend eine Kabine für hängend zu transportierende Schlachttierkörperteilstücke mit mehreren schräg zum Boden gerichteten düsenförmigen Ausblasöffnungen für Luft und Ansaugkanälen für ein oder mehrere Axiallüfter angeordnet in einem geschlossenen Umluftsystem.

Dieses System hat etliche Nachteile. Eine Ursache liegt wohl darin begründet, dass die Erfinder Energie offensichtlich im Preis höher kalkulierten als den Rohstoffpreis für Fleisch. Daher gilt die Zielsetzung der Energiereduzierung. Die Betrachtung der Energiereduzierung lässt außer Acht, dass so ein Verlust an Masse bei der Kühlung oberflächentrockner Schlachttierkörper entsteht.

Bei der beschriebenen Verfahrensweise tritt nicht weniger, sondern mehr TBW /ECW/ ICW (totalbodywater - Gesamtkörperwasser / extrazelluläres Wasser /intrazelluläres Wasser) aus, so dass die Bilanz der Erfindung wirtschaftlich nachteilig ist.

Wichtiger noch sind die hygienischen und daraus folgenden technischen Probleme mit dem Stand der Technik. Einerseits führt die minimale Zeitspanne, in welcher die Tierkörper fortlaufend durch die beschriebene Kabine geführt werden, zu keiner hinreichenden Trocknung und andererseits ist es hygienisch unvorteilhaft, unbehandelte Luft zu verwenden durch Wiederaufblasen der in der Kabine abgezogenen gesättigten feuchten Luft in einem geschlossenen Kreislauf.

Aus der EP 0679335 B1 ist eine Schlachtkörperreinigungsanlage bekannt mit Einrichtungen für die Zufuhr von unter Druck stehender Reinigungsflüssigkeit; einer Vakuumquelle, einer Vakuumdüseneinrichtung, einem Schlachtkörperreinigungskopf, der von Hand eingesetzt und positioniert werden kann, wobei der Schlachtkörper-reinigungskopf an einer Oberfläche eines Schlachtkörpers unterhalb einer darauf befindlichen Verunreinigung angelegt werden kann, der Schlachtkörperreinigungs-kopf im Bereich der Vakuumöffnung eine Reinigungsflüssigkeitsdüse aufweist und der Zustrom von Reinigungsflüssigkeit zu der Flüssigkeitsdüse gesteuert wird und Einrichtungen vorgesehen sind, die die Vakuumöffnung neben einer Verunreinigung auf einem Schlachtkörper positionieren, um die Verunreinigung von diesem zu entfernen, ohne dass der Schlachtkörperreinigungskopf sich auf der Oberfläche des Schlachtkörpers festsaugt. Dabei soll eine wasserhaltige Reinigungsflüssigkeit mit einer Temperatur von mindestens 72 °C verwendet werden.

Diese Idee löst die Probleme kaum, da hier mit viel heißem Wasser von Hand gearbeitet wird, ist in der Nachtropfstrecke mit noch mehr Oberflächenwasser zu rechnen. Abgesehen davon ist das manuelle Absaugen der zudem noch unerwünschter weise mit Chemikalien belasteten Flüssigkeit aufwändig und hemmend für eine hohe Durchsatzgeschwindigkeit.

Aus der Druckschrift DE 3840782 A1 ist zur Konstanthaltung der Temperatur und atmosphärischen Bedingungen bei der Geflügelaufzucht ein Brutapparat offenbart mit Luftströmungssteuereinrichtungen, um das Strömen von frischer Außenluft in die Brutkammer zu steuern und um die Luft im Inneren der Brutkammer zu steuern; Klimaeinstelleinrichtungen, um die Luft in der Brutkammer zu beheizen, zu befeuchten und umzuwälzen sowie Steuer- bzw. Regeleinrichtungen für die Klimaeinstelleinrichtungen, um den Temperaturpegel, den Feuchtigkeitspegel und die Luftzirkulation in der Kammer zu überwachen und um die Klimaeinstelleinrichtungen und die Luftströmungssteuereinrichtungen derart zu steuern bzw. zu regeln, dass Temperatur und Feuchtigkeit auf vorgegebenen Pegeln gehalten werden und eine vorgegebene Luftzirkulation aufrechterhalten wird.

Nicht offenbart ist, ob diese Einrichtungen auch in Schlachthöfen verwendbar sind.

Aus der Druckschrift DE 8903228 U1 ist auch ein Lüfter, vorzugsweise Wandlüfter, dessen Laufrad in einem einen Lufteinlass und einen Luftauslass aufweisenden Gehäuse angeordnet ist, dargestellt, der einen Pollenfilter aufweist, der von der vom Laufrad geförderten Luft durchströmbar ist.

Nicht offenbart ist, ob derartige Filter auch bei Krankheitskeimen wirksam sind.

Von daher liegt der Erfindung das Problem zugrunde, ein Verfahren und eine Vorrichtung vorzuschlagen, mit der das Keimwachstum des Schlachttierkörpers eingedämmt und eine Verfälschung des Schlachtgewichtes verringert wird.

Das Problem wird durch die Merkmale der Ansprüche 1, 10 und 19 gelöst. Weiterbildungen der Erfindung sind in den unselbständigen Ansprüchen erfasst.

Die Lösung bewirkt zunächst hygienische Verbesserungen. Aufgrund der eingangs beschriebenen Vorbehandlung haben die Schlachttierkörper nach demTöten und das Ausweiden in einer so genannten Nachtropfstrecke Körpertemperatur oder sogar eine erhöhte Körpertemperatur und sind mindestens oberflächlich nass. Die Schlachttierkörper sind daher einem erhöhten Keimwachstum ausgesetzt, solange sie nicht einer sofortigen Kühlung unterzogen werden, da sich die Keimzahl innerhalb 20 min verdoppelt.

Unter Schlachttierkörpern werden im Folgenden verstanden:

Körper von allen zum Schlachten geeigneten Tieren, insbesondere Rinder, Schweine, Schafe, Ziegen oder Geflügel, jedoch nur der Rumpf ohne Blut und Gedärme. Bei großen Tieren können dies auch viertel oder Hälften von Rümpfen sein. Die Erfindung wird im Wesentlichen anhand des Umganges mit Schweinehälften beschrieben.

Der Zeitraum zwischen Tötung des Tieres / Schlachtung und Wiegen und dem daran anschließenden sofortigen Kühlen beträgt je nach nationaler Durchführungs-Verordnung für Schlachtvieh: nach dem Öffnen des Tieres beispielsweise max. 45 min in Deutschland und max. 20 min. in Niederlande. Ein weiterer Vorteil der Erfindung besteht in der verbesserten Erfassung des realen Gewichtes des angelieferten Schlachtkörpers.

Nationale Durchführungsverordnungen regeln den Zeitpunkt der Verwiegung des Schlachttierkörpers. Das dabei ermittelte Gewicht ist Basis der Bezahlung des Rohstoffes gegenüber dem Lieferanten. Dieser Zeitpunkt liegt direkt hinter der Nachtropfstrecke.

Der Lieferant hat den Vorteil und der Schlachtbetrieb den Nachteil, dass ein von beiden Parteien nicht beeinflussbarer Gewichtszuwachs durch die Vorbehandlung mit warmem oder heißem Wasser entsteht. Dem Schlachttierkörper wurde Oberflächenwasser zugeführt und der Körper ist durch Erwärmung noch aufnahmefähiger für Wasser geworden.

Zur Umsetzung der Erfindung werden einige Maßnahmen ergriffen und bauliche Veränderungen des Schlachtbetriebs vorgeschlagen.

Nach Abschluss des Schlachtprozesses durchläuft der schlachtwarme Tierkörper hängend an einer Förderkette die Nachtropfstrecke zum endgültigen Ausbluten und Abtropfen des Wassers, die sich vorzugsweise in einem eigenen Raum befinden sollte. Diese Nachtropfstrecke ist in ihrer Größe der laut Durchführungs-Verordnung definierten Verweilzeit, sowie auch der Schlachtgeschwindigkeit des jeweiligen Unternehmens angepasst.

Es ist nicht gestattet, die Schlachttierkörper vor dem Verwiegen bereits effektiv abzukühlen; die Körper sollen etwa Körpertemperatur behalten (37°C +/- etwa 2K), da sonst Gewicht verloren geht (DD 232641 A1).

Nach dem Verwiegen werden die schlachtwarmen Tierkörper dem herkömmlichen Kühlverfahren unterzogen. Die Kühlräume werden dabei mit handelsüblichen Befeuchtungsanlagen ausgestattet, um so den Schwundverlust zu minimieren, der durch Kühlung bis zum Erreichen der gesetzlich vorgeschriebenen Kerntemperatur von +7 °C eintritt. Hierbei entstehen keine bakteriologischen Nachteile.

Die später beschriebene technische Ausstattung bezieht sich auf eine Schlachtgeschwindigkeit von 270 Schweine / Stunde mit einer Leistungsreserve von ca. 30%.

### Hygienische Probleme in der Nachtropfstrecke

Die Mikroorganismen, die Krankheiten erregen können, vermehren sich in oder auf den Lebensmitteln.

Mikroorganismen, zu denen die Erreger von Lebensmittelvergiftungen gehören, sind Kleinstlebewesen, die mit bloßem Auge nicht zu erkennen sind. Überall in der Natur gibt es Mikroorganismen: Sie befinden sich in der Luft, im Wasser, im Boden, auf der Oberfläche der Haut und den Schleimhäuten von Menschen und Tieren. Zu den Mikroorganismen gehören Bakterien, Hefen und Schimmelpilze, aber auch Viren.

Rohe Lebensmittel können schon bei ihrer Gewinnung - also beim Schlachten - mit Mikroorganismen behaftet sein, auch mit pathogenen Keimen. Diese Erreger oder Krankheitskeime können verbreitet und übertragen werden, auch wenn diese Bearbeitung in der allgemein üblichen Weise erfolgt.

Zu einer direkten Verbreitung von Erregern kommt es etwa, wenn Lebensmittel mit unsauberen Händen berührt werden, vor allem bei infizierten Wunden, durch Husten oder Niesen sowie bei mangelhafter Körper- und Kleiderhygiene.

Mikroorganismen werden zudem indirekt verbreitet, wenn Arbeitsräume und Arbeitsgeräte so beschaffen sind, dass sie schlecht gereinigt werden können oder nur mangelhaft gereinigt werden.

Mikroorganismen vermehren sich durch Teilung. Unter günstigen Bedingungen kann sich ein Mikroorganismus in 20 Minuten einmal teilen. Allerdings nur unter Bedingungen, die für die Mikroorganismen günstig sind, wie die Temperatur des Lebensmittels, sein Wassergehalt, sein Säuregrad und von den Nährstoffen, die das Lebensmittel enthält.

Die meisten Krankheitserreger vermehren sich am besten im mittleren Temperatur-Bereich zwischen 10°C und 35 °C, also auch auf schlachtwarmen Tieren. Je länger ein Lebensmittel bei diesen mittleren Temperaturen zwischen 20 °C und 35 °C lagert, desto stärker vermehren sich die Keime. Günstig für die Vermehrung der Mikroorganismen sind Lebensmittel, die viele Nährstoffe enthalten, z.B. hohe Wassergehalte und Eiweiß, also z. B. Fleisch.

Wichtig für das Leben von Mikroorganismen ist das Wasser, weil in ihm die Nährstoffe gelöst und transportiert werden. Entscheidend ist aber nicht, wie viel Wasser ein Lebensmittel insgesamt enthält, sondern wie viel von diesem Wasser frei verfügbar ist, günstigstenfalls mindestens 15 % Wasser.

Von großer Bedeutung für die Vermehrung von Mikroorganismen ist neben Temperatur, Wassergehalt, Säuregrad und Nährstoffangebot auch noch die Struktur des Lebensmittels: Bei rohem Fleisch wird die keimbelastende Oberfläche mit dem keimarmen Inneren des Fleisches kontaktiert, in dem Nährstoffe und Wasser freigesetzt sind, so dass Bakterien sich sehr gut vermehren können.

Die Anzahl der Mikroorganismen, die sich auf oder in den verschiedenen Lebensmitteln befinden, ist sehr unterschiedlich. Bei Frischfleisch kann man z.B. einige Tausend bis einige Millionen Bakterien je Quadratzentimeter finden, ohne dass das Fleisch deshalb verdorben sein muss.

Normale Keimgehalte bei Schweinefleisch als Gesamtkeimzahl (keimbildende Kolonien je Einheit) je Quadratzentimeter: (GKZ KBE) sind:

| | |
|---|---|
| Schweinefleisch (frisch) | 100.000 (5log KBE) |
| Schweinefleisch (abgehangen) | 100.000.000 (8log KBE) |

Diese Keimzahlen sind künftig bei Erzeugern nicht mehr zulässig.

Die Entscheidung 2001/471/EG der EU-Kommission vom 8. Juni 2001 über "Vorschriften zur regelmäßigen Überwachung der allgemeinen Hygienebedingungen durch betriebseigene Kontrollen gemäß Richtlinie 64/433/EWG über die gesundheitlichen Bedingungen für die Gewinnung und das in Verkehrbringen von frischem Fleisch" verpflichtet die Betreiber von Schlacht- und Zerlegebetrieben zur Kontrolle der Produktionsbedingungen im Betrieb auf die Einhaltung der allgemeinen Hygienenormen anhand von regelmäßig, gemäß den sieben Prinzipien des HACCP-Systems durchgeführten Untersuchungen.

Diese Entscheidung legt für Schlachttierkörper die Kontrolle der Reinigung und Desinfektion, zugelassene Probenentnahmeverfahren, Frequenz, Anzahl, Zeitpunkt, Fläche, Verfahren und für Schlachttierkörper die Lokalisationen der zu erhebenden Proben fest und macht Vorgaben zur Durchführung mikrobiologischer Untersuchungen sowie zur Aufzeichnung, Auswertung und Beurteilung der Ergebnisse betriebseigener Kontrollen, um eine einheitliche Kontrolle der Durchführung zu gewährleisten.

Die tagesdurchschnittlichen log₁₀ Werte sind in die Kategorien "annehmbar", "kritisch" und "unannehmbar" einzuteilen. Die EU-Entscheidung definiert beispielsweise Grenzlinien für die aufgeführten Kategorien (Tabelle 1) in der Verordnung (EG) Nr. 2073/2005 der Kommission vom 15. November 2005 über mikrobiologische Kriterien für Lebensmittel (Amtsblatt Nr. L 338 vom 22/12/2005 S. 0001 - 0026)

**Tabelle 1. Bewertungskriterien zur Einteilung der Ergebnisse (tagesdurchschnittliche log₁₀-Werte: Gesamtkeinzahl, Enterobacteriaceae) von Rinder- und Schweineschlachttrieköpern bei destruktiver Probenentnahme in die Karegorien "annehmbar", "kritisch" und "unannehmbar"**

| | Annehmbarer Bereich (log₁₀ KBE/cm²) | | Kritischer Bereich (log₁₀ KBE/cm²) | | Unannehmbarer Bereich (log₁₀ KBE/cm²) | |
|---|---|---|---|---|---|---|
| | Rinder* | Schweine | Rinder* | Schweine | Rinder* | Schweine |
| Gesamtkeimzahl | < 3.5 | < 4.0 | 3.5 - 5.0 | 4.0 - 5.0 | > 5.0 | > 5.0 |
| *Enterobacteriaceae* | < 1.5 | < 2.0 | 1.5 - 2.5 | 2.0 - 3.0 | > 2.5 | > 3.0 |

| | | | | | | |
|---|---|---|---|---|---|---|
| * Werte ebenfalls guttig für Pferde-. Schaf- und Ziegenschlachttierkörper | | | | | | |

Umweltprobleme im Schlachthof

Unter dem Motto: "Beste Verfahrenstechnik" BVT der DE-Regierung war im Internet unter am12.08.2007 um 21:57:23 Uhr zu lesen:

Der Einsatz von Energie zur Erhitzung von Wasser ist auch in Schlachthöfen ein ... wesentliches Umweltproblem. Für die Herstellung von Heißwasser wird in erster Linie Öl und/oder Erdgas eingesetzt. Kesselwasser wird vor der Verwendung üblicherweise enthärtet. Die Vorschrift zur Verwendung von Heißwasser verteilt sich auf Becken und Duschen, Schweinebrühtanks (58 -65 °C), Absprühvorrichtungen (60 - 65 ºC) und Sterilisationsbäder (> 82 ºC). [57, DoE, 1993].

Die umweltschonende Ressourcenverwendung ist Bestandteil von EN ISO 14001:1996 und dem EU-Umwelt-Audit-System (EMAS). Dieses System wird in einer Reihe von IVU-Anlagen (Anlagen entsprechend der Richtlinie 96/61/EG über die integrierte Vermeidung und Verminderung der Umweltverschmutzung) eingesetzt und sollte von jedem Betrieb angestrebt werden; für Schlachthöfe ist dies zurzeit gesetzlich nicht erforderlich.

Die Erfindung will das Prinzip bei der Aufbereitung von Warmwasser und der Luftfilterung erstmals mit den angestrebten Verbesserungen realisieren.

Die erste Lösung mit dem erfindungsgemäßen Verfahren zur Behandlung von Körpern geschlachteter Tiere während der hängenden Beförderung nach dem Ausweiden und vor dem Wiegen in einem Schlachthof mittels eines Luftstromes sieht vor, dass die Körper in einem separaten Raum, der in der Regel heute als sogenannte Nachtropfstrecke verfügbar ist, mit horizontal geführter aufbereiteter Luft saugend mit Geschwindigkeiten von 1,5 bis 6 m/s umströmt werden.

Angestrebt ist dabei ein Luftwechsel im Raum von 1- 3-mal pro Minute. Anderseits darf die Strömungsgeschwindigkeit nicht so hoch sein, dass Feststoffe vom Boden angesaugt werde.

Während dieser Behandlung werden die Körper in einer Nachtropfstrecke des Schlachthofes mäanderförmig in einer Vielzahl von Reihen an Lufteinlass- und Luftauslassöffnungen vorbeigefördert werden, sodass sie mehrfach von der Luftströmung umspült werden.

In Weiterbildung der Erfindung werden die Luftöffnungen zu etwa 60 % bis 100 % der gestreckten Länge der Körper geöffnet und sind für das Umströmen der Körper mit Luft optimal ausgelegt.

Die abgesaugte Luft wird wie in einer für Wohnräume ausgerüsteten Anlage gefiltert, entfeuchtet und gekühlt, bevor sie den Lufteinlassöffnungen wieder zugeführt wird. Die abgesaugte Luft wird zur Erwärmung von Brauchwasser des Schlachthofes - verwendbar z. B. zum Reinigen der Schlachttiere - mittels Wärmetauscher genutzt. Damit wird auch der Forderung nach umweltgerechter Produktion entsprochen.

Das Verfahren sieht erfindungsgemäß auch vor, dass die abgesaugte Luft durch Filter zum Ausfiltern von typischerweise auf Frischfleisch sich ansiedelnden und/oder in den Aerosolen und / oder der Luft in der Nachtropfstrecke enthaltenen Krankheitskeimen geleitet werden. In der Praxis kann mit dem Verfahren und einer angepassten Vorrichtung eine Keimzahl GKZ von weniger 100 pro cm² (2logKBE) erreicht werden, also optimal im Sinne der Verordnungen der EU.

Zur Optimierung des Verfahrens soll die Temperatur der Körper und/oder deren Umgebungstemperatur an einer Zuführöffnung der Nachtropfstrecke für derartige Körper erfasst, gegebenenfalls gespeichert und mit einer gleichartigen Temperatur an der Abfuhröffnung der Nachtropfstrecke verglichen und die Differenz als Stellgröße für die Aufbereitung der Luft verwendet werden. Die Körper dürfen vor dem Verwiegen nicht herab gekühlt werden; die staatlichen Durchführungsverordnungen lassen das nicht zu.

Daher wird die Luftgeschwindigkeit saugseitig so gesteuert, dass sich zwischen Lufteinlass und Luftauslass maximal eine Temperaturerhöhung der Luft von 2 bis 15 Kelvin einstellt. Damit wird ein Auskühlen der Körper sicher verhindert. Als vorteilhaft hat es sich erwiesen, dass die Temperatur der abgesaugten Luft so aufbereitet wird, dass sie an der Lufteinlassseite in den Raum mindestens 12 °C, vorzugsweise 14 - 16 °C beträgt.

Die zweite erfindungsgemäße Lösung umfasst eine Vorrichtung zur Behandlung von mittels Hängeförderer transportierter Körper geschlachteter Tiere nach dem Ausweiden und vor dem Wiegen in einem Schlachthof in einem abgetrennten Raum. Der Hängeförderer wird mäanderförmig in parallelen Spuren quer zu horizontal ausgerichteten Absaugöffnungen und Einlassöffnungen für Luft geführt. Die Einlass - und Absaugöffnungen sind durch eine außerhalb des Raumes angeordnete Klimaanlage zur Entfeuchtung und Kühlung der aus dem Raum abgesaugten Luft verbunden.

Vorzugsweise sind die Einlass - und Absaugöffnungen in die Wände des Raumes eingelassen. Alternativ kann bei dünnen Wänden so verfahren werden, dass die Vorrichtungen mit den Öffnungen auf die Wand aufgebracht und die sich anschließenden Luftkanäle durch das Dach oder den Boden des Raumes oder seitwärts zur Klimaanlage geführt werden.

Beim Neubau kann die Nachtropfstrecke auch aus Fertigteilen zusammengesetzt oder als Container ausgebildet sein, der lediglich eine typische Hallenwanddicke von weniger als 100 mm hat und isoliert ist.

Er weist einen Eingang für die Zufuhr der Schlachttierkörper und einen entsprechenden Ausgang auf. Der typischerweise verwendeten Hängeförderer für die Schlachtkörper, das können ganze Rümpfe oder auch Hälften (Schweine) oder Viertel (Rinder) sein, werden in der Regel an der Raumdecke oder einem separaten Ständerwerk angebracht. Sie weisen Haken oder andere für sich bekannte Lastaufnahmemittel auf zum hängenden Transport des Schlachtgutes.

Für eine laminare Strömung sind die Öffnungen zur Unterteilung eines Luftstromes mit horizontal ausgerichteten oder ausrichtbaren Lamellen versehen. Die Luft kann dann in geeigneter Höhe durch das Schlachtgut streichen und dabei die Körper eng umströmen.

Die Absaugöffnungen sind mit wirtschaftlichen Ventilatoren in einseitig saugender Ausführung bestückt, deren Laufrad-Schaufeln - mit hohem Wirkungsgrad - rückwärts gekrümmt sind.

Die Ventilatoren haben auf der Laufradachse elektrisch direkt angetriebene Motoren; daher kann auf verschmutzbare Keilriemen oder ähnliches verzichtet werden.

Die Aufbereitung der Luft besorgt eine Klimaanlage. Sie ist als separates geschlossenes System in einem oder mehreren Containern ausgebildet und in der Nähe des Raumes/ Nachtropfstrecke platzierbar und mittels Luftleitungen zu den Einlass- und Absaugöffnungen einfach verbindbar. Dies bewirkt einen hohen Vorfertigungsgrad der Anlage, sodass der Fachmann in wenigen Tagen vorhandene Schlachthöfe umrüsten oder gar aus Containern eine neue Nachtropfstrecke errichten kann.

Diese hat als separierter Raum mindestens einen Eingang und einen Ausgang für die Körper. Mit Sensoren zur Erfassung der wichtigsten Parameter der Luft, mindestens jedoch deren Temperatur und Feuchte, ist der Raum erfindungsgemäß auszustatten. Die Sensoren erfassen die Parameter und leiten sie, signaltechnisch umgesetzt, an die Klimaanlage weiter.

Die Klimaanlage hat eine Steuer- oder Regelanlage zur Behandlung der Luft, die Signale von Sensoren im Raum empfangen kann. So wird ständig geprüft wie die Temperatur in der Umgebung der Körper ist und ob die Luft anders konditioniert werden muss oder bei Stopp oder Stockung der Schlachtung sogar auszusetzen ist.

Die Einlass- und Absaugöffnungen haben eine Höhe, die etwa der Länge des Rumpfes der Körper entspricht und eine Breite, die größer ist als die zu erwartende Breite des am Hängeförderer hängenden Rumpfes ist. In der Praxis wurden damit die besten Ergebnisse erzielt.

Erfindungsgemäß kann auch eine vorhandene Nachtropfstrecke in einem Schlachthof verwendet werden, wenn der ausgebildete Raum durch Einbau von Einlass- und Absaugöffnungen in zwei einander gegenüberliegenden Umfassungswänden, die quer zum Eingang und Ausgang der Körper angeordnet sind; sodann muss eine Kopplung der Öffnungen mit einer Klimaanlage zur Erzeugung eines horizontal gerichteten Luftstromes quer zu hängend durch den Raum transportierten Schlachttierkörpern hergestellt werden.

Die Einlass- und Absaugöffnungen sollen direkt einander gegenüberliegend angeordnet werden für eine optimierte Strömung der Luft.

Anhand einer schematischen Zeichnung soll die Erfindung in ihrer räumlichen Anordnung verdeutlicht werden.

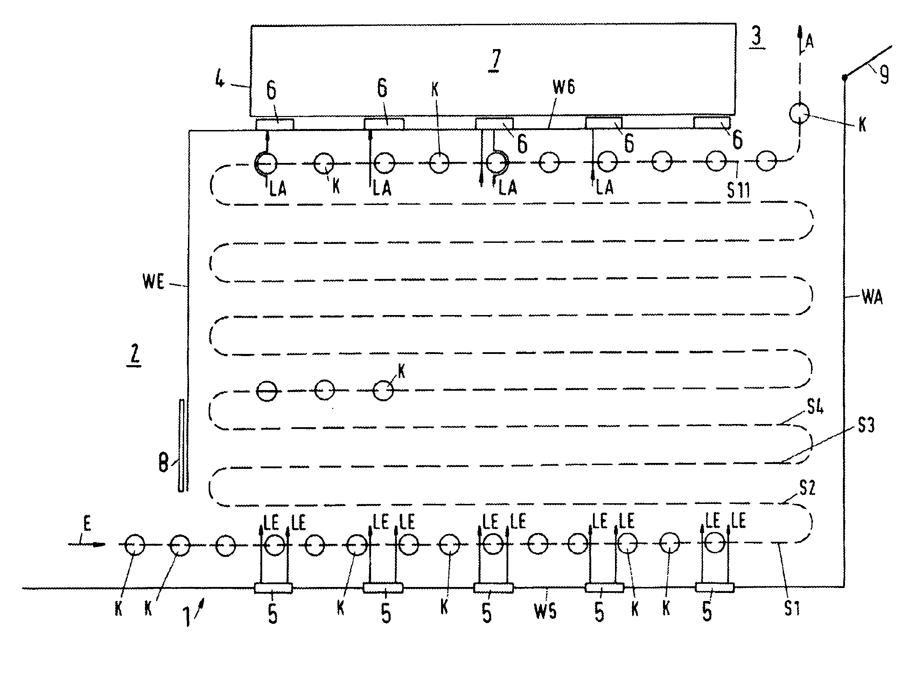

Die Figur zeigt eine Nachtropfstrecke 1 mit Eingang E in der Wand WE von der vorhergehenden Schlachtstrecke 2 und den Ausgang A in der Wand WA zur Waage 3 und zum Kühlhaus, die nicht dargestellt sind. Der Eingang E kann durch Tür 8, der Ausgang A durch Tür 9 verschlossen werden, zum Beispiel in Ruhezeiten oder zur Abschottung der Nachttropfstrecke bei stoppender oder stockender Schlachtung. Zwischen Eingang E und Ausgang A zieht sich ÜberKopf ein für sich bekannter Hängeförderer mit seinen mäanderförmig verlaufenden Spuren S1, S2, S3, S4 bis S11 hin.

Am Hängeförderer S1 - S11 sind zahlreiche Schweinehälften oder Schlachttierkörper K zu erkennen, die vom Hängeförderer in Schleifen durch den Raum gezogen werden zum endgültigen Ausbluten und abtropfen überschüssigen Wassers.

In den Wänden W5 und W6 sind Einlassöffnungen 5 bzw. mit Ventilatoren (nicht gezeigt) bestückte Absaugöffnungen 6 zu sehen; jeweils 5 Stück pro Wand mit etwa jeweils 1 m² Gesamtöffnung, die jedoch durch horizontal sich erstreckenden Lamellen auch nur teils geöffnet sein können. Bei Nichtgebrauch können die Öffnungen 5, 6 durch nicht gezeigte Türen verschlossen werden. Die horizontalen Lamellen richten einen Luftstrom LE von den Einlassöffnungen 5 horizontal zu den Absaugöffnungen 6, sobald die Ventilatoren angeschaltet werden.

Der abgesaugte Luftstrom LA ist durch die im Raum herrschende Luftfeuchtigkeit von bis zu 95% und einer von dem körperwarmen Schlachtgut ausgehenden Strahlung auch mit Keimen und Aerosolen beladen. Der Luftstrom LA wird durch die Öffnungen 6 direkt zur Klimaanlage 7, die in einem separaten Gehäuse wie einem Container 4 untergebracht ist, befördert, dort regeneriert und zu den Einlassöffnungen zurückgeführt. Die Wärme wird vorzugsweise per Wärmetauscher einem nicht gezeigten Wasservorrat für das Reinigen der Tiere / Körper vor der Nachtropfstrecke 1 zugeleitet.

Die Pfeile LE und LA verdeutlichen das Umströmen der Körper K, von denen nur einige dargestellt sind. In der Praxis ist der gesamte mäanderförmige Hängeförderer S1 - S11 mit Schweinehälften K beladen; diese hängen also relativ dicht zusammen. Das Strömungsverhalten erlaubt es das Oberflächenwasser von den hier gezeigten Schweinehälften fast komplett mit der Luft LA auszutragen bei entsprechender Häufigkeit der Luftwechsel. Die praktische Verweildauer in Raum 1 beträgt etwa 20 Minuten, der Durchsatz in Raum 1 etwa 270 Körper pro Stunde. Der Volumenstrom der Klimaanlage 7 beträgt etwa 43000 m³/h, die günstigste Luftgeschwindigkeit LE, LA war hier in der Praxis etwa 2 - 3 m/s bei einem Druckabfall von etwa 400 pa.

In der Nähe der Schiebetür 8 bzw. Klapptür 9 zum Verschließen von Eingang E und Ausgang A sind nicht gezeigte Sensoren zur Steuerung der Raumtemperatur und Feuchte sowie zur Steuerung der Klimaanlage 7 angebracht; andere Standorte können der Raumsituation und der Schlachtgeschwindigkeit angepasst zusätzlich oder alternativ vom Fachmann bestimmt werden. Derartige Steuerungen sind für sich dem Fachmann aus dem Stand der Technik bekannt.

## Patentansprüche

1. Verfahren zur Behandlung von Körpern geschlachteter Tiere während der hängenden Beförderung nach dem Ausweiden und vor dem Wiegen in einem Schlachthof mittels eines Luftstromes, **dadurch gekennzeichnet, dass** die Körper (K) in einem separaten Raum (1) mit horizontal geführter aufbereiteter Luft (LE, LA) saugend mit Geschwindigkeiten von 1,5 bis 6 m/s umströmt werden.

2. Verfahren nach Anspruch 1, **dadurch gekennzeichnet, dass** die Körper in einer Nachtropfstrecke (1) des Schlachthofes (2) mäanderförmig in einer Vielzahl von Reihen (S1 - S11) an Lufteinlass- und Luftauslassöffnungen (5, 6) vorbei mehrfach durch den Luftstrom (LE, LA) gefördert werden.

3. Verfahren nach Anspruch 1 oder 2, **dadurch gekennzeichnet, dass** die Luftöffnungen zu etwa 60 % bis 100 % der gestreckten Länge der Körper (K) geöffnet sind für das Umströmen der Körper (K) mit Luft (LE, LA).

4. Verfahren nach einem der vorhergehenden Ansprüche, **dadurch gekennzeichnet, dass** die abgesaugte Luft (LA) gefiltert, entfeuchtet und gekühlt wird, bevor sie den Lufteinlassöffnungen (5) wieder zugeführt wird.

5. Verfahren nach einem der vorhergehenden Ansprüche, **dadurch gekennzeichnet, dass** die abgesaugte Luft (LA) zur Erwärmung von Brauchwasser des Schlachthofes (2) mittels Wärmetauscher genutzt wird.

6. Verfahren nach einem der vorhergehenden Ansprüche, **dadurch gekennzeichnet, dass** die abgesaugte Luft (LA) durch Filter zum Ausfiltern von typischerweise auf Frischfleisch sich ansiedelnden und/oder in den Aerosolen und / oder der Luft in der Nachtropfstrecke (1) enthaltenen Krankheitskeimen geleitet werden.

7. Verfahren nach einem der vorhergehenden Ansprüche, **dadurch gekennzeichnet, dass** die Temperatur der Körper (K) und/oder deren Umgebungstemperatur in der Nähe einer Zuführöffnung (E) der Nachtropfstrecke (1) für derartige Körper (K) erfasst, gegebenenfalls gespeichert und mit einer gleichartigen Temperatur in der Nähe der Abfuhröffnung (A) der Nachtropfstrecke (1) verglichen und die Differenz als Stellgröße für die Aufbereitung der Luft (LA) verwendet wird.

8. Verfahren nach einem der vorhergehenden Ansprüche, **dadurch gekennzeichnet, dass** die Luftgeschwindigkeit saugseitig so gesteuert wird, dass sich zwischen Lufteinlass (5, LE) und Luftauslass (6, LA) maximal eine Temperaturerhöhung der Luft von 2 bis 15 Kelvin einstellt.

9. Verfahren nach einem der vorhergehenden Ansprüche, **dadurch gekennzeichnet, dass** die Temperatur der abgesaugten Luft (LA) so aufbereitet wird, dass sie an der Lufteinlassseite (5, LE) mindestens 12 °C, vorzugsweise 14 - 16 °C, beträgt.

10. Vorrichtung zur Behandlung von mittels Hängeförderer transportierter Körper geschlachteter Tiere nach dem Ausweiden und vor dem Wiegen in einem Schlachthof in einem abgetrennten Raum , **dadurch gekennzeichnet, dass** der Hängeförderer mäanderförmig in parallelen Spuren (S1 - S11) quer zu horizontal ausgerichteten Absaugöffnungen (6) und Einlassöffnungen (5) für Luft führbar ist und die Einlass - und Absaugöffnungen (5, 6) durch eine außerhalb des Raumes (1) angeordnete Klimaanlage (7) zur Entfeuchtung und Kühlung der aus dem Raum (1) abgesaugten Luft (LA) verbunden sind.

11. Vorrichtung nach Anspruch 10 , **dadurch gekennzeichnet, dass** die Einlass - und Absaugöffnungen (5, 6) an zwei gegenüber liegenden Wänden (W5, W6) des Raumes (1) angebracht sind.

12. Vorrichtung nach einem der vorhergehenden Ansprüche 10 - 11,
**dadurch gekennzeichnet, dass** die Öffnungen (5, 6) zur Unterteilung eines Luftstromes (LE, LA) mit horizontal sich erstreckenden Lamellen versehen sind.

13. Vorrichtung nach einem der vorhergehenden Ansprüche 10 - 12,
**dadurch gekennzeichnet, dass** die Absaugöffnungen (6) mit Ventilatoren in einseitig saugender Ausführung bestückt sind, deren Laufrad-Schaufeln rückwärts gekrümmt sind.

14. Vorrichtung nach einem der vorhergehenden Ansprüche 10 - 13,
**dadurch gekennzeichnet, dass** die Ventilatoren auf der Laufradachse mit elektrisch direkt angetriebenen Motoren bestückt sind.

15. Vorrichtung nach einem der vorhergehenden Ansprüche 10- 14, **dadurch gekennzeichnet, dass** die Klimaanlage (7) als separates geschlossenes System in einem oder mehreren Containern (4) ausgebildet ist, die in der Nähe des Raumes (1) platzierbar und mittels Luftleitungen zu den Einlass- und Absaugöffnungen (5, 6) verbindbar ist.

16. Vorrichtung nach einem der vorhergehenden Ansprüche 10-15, **dadurch gekennzeichnet, dass** der Raum (1) mindestens in der Nähe eines Eingangs (E) und eines Ausgangs (A) für die Körper (K) mit Sensoren zur Erfassung der wichtigsten Parameter der Luft (LE, LA), mindestens jedoch deren Temperatur und Feuchte, ausgestattet ist und die Sensoren die erfassten Parameter an die Klimaanlage (7) signalisieren.

17. Vorrichtung nach einem der vorhergehenden Ansprüche 10 - 16,
**dadurch gekennzeichnet, dass** die Klimaanlage (7) eine Steuer- oder
Regelanlage zur Behandlung der Luft (LE, LA) aufweist, die Signale von Sensoren im Raum (1) empfangen kann.

18. Vorrichtung nach einem der vorhergehenden Ansprüche 10- 17, **dadurch gekennzeichnet, dass** die Einlass- und Absaugöffnungen (5, 6) eine Höhe haben, die etwa der Länge des Rumpfes der Körper (K) entspricht und eine Breite aufweisen, die größer ist als die zu erwartende Breite des am Hängeförderer (S1 - S11) hängenden Rumpfes (K).

19. Verwendung eines als Nachtropfstrecke in einem Schlachthof (2) ausgebildeten Raumes (1) durch Einbau oder Anbau von Einlass- und Absaugöffnungen (5, 6) an zwei einander gegenüberliegenden Umfassungswänden (W5, W6), die im Wesentlichen quer zum Eingang (E)/ Ausgang (A) für die Körper (K) angeordnet sind und Kopplung der Öffnungen (5, 6) mit einer Klimaanlage (7) zur Erzeugung eines horizontal gerichteten Luftstromes (LE, LA), quer zu hängend durch den Raum (1) transportierten Schlachttierkörpern (K).

20. Verwendung nach Anspruch 19, **dadurch gekennzeichnet, dass** die Einlass- und Absaugöffnungen (5, 6) einander gegenüberliegend angeordnet werden.

## Claims

1. Method of treating carcasses of slaughtered animals in a slaughterhouse by means of a stream of air during suspended transport after evisceration and before weighing, **characterised in that**, with suction, a horizontally directed stream of conditioned air (LE, LA) is caused to flow around the carcasses (K) in a separate room (1) at speeds of 1.5 to 6 m/s.

2. Method according to claim 1, **characterised in that**, in a drip-draining zone (1) of the slaughterhouse (2), the carcasses are fed past air inlet and air outlet openings (5, 6) and repeatedly through the stream of air (LE, LA) in a plurality of lines (S1 - S11) in a meandering configuration.

3. Method according to claim 1 or 2, **characterised in that** the air openings are open over approximately 60% to 100% of the extended length of the carcasses for the stream of air (LE, LA) to flow around the carcasses (K).

4. Method according to one of the preceding claims, **characterised in that** the extracted air (LA) is filtered, dehumidified and cooled before it is fed back to the air inlet openings (5).

5. Method according to one of the preceding claims, **characterised in that** the extracted air (LA) is used for the heating of processing water for the slaughterhouse (2) by means of heat exchangers.

6. Method according to one of the preceding claims, **characterised in that** the extracted air (LA) is conveyed through filters for filtering out pathogenic germs which typically colonise fresh meat and/or which are contained in the aerosols and/or the air in the drip-draining zone (1).

7. Method according to one of the preceding claims, **characterised in that** the temperature of the carcasses (K) and/or their ambient temperature is sensed in the vicinity of an infeed opening (E) for such carcasses (K) into the drip-draining zone (1), is stored if required, and is compared with a temperature of the same kind which exists in the vicinity of an outfeed opening (A) from the drip-draining zone (1), and the difference is used as a controlling variable for the conditioning of the air (LA).

8. Method according to one of the preceding claims, **characterised in that** the speed of the air is controlled on the suction side in such a way that a maximum increase in the temperature of the air of 2 to 25 Kelvin occurs between the air inlets (5, LE) and the air outlets (6, LA).

9. Method according to one of the preceding claims, **characterised in that** the temperature of the extracted air (LA) is treated in such a way that it is at least 12°C and preferably 14 - 16°C on the air inlet side (5, LE).

10. Arrangement for treating carcasses of slaughtered animals which are transported by means of overhead conveyors, after evisceration and before weighing, in a separate room in a slaughterhouse, **characterised in that** the overhead conveyor can be run in parallel lines (S1 - S11) in the form of meanders transversely to horizontally aligned extraction openings (6) and inlet openings (5) for air, and the inlet and extraction openings (5, 6) are connected by an air conditioning system (7) arranged outside the room (1) for dehumidifying and cooling the air (LA) extracted from the room (1).

11. Arrangement according to claim 10, **characterised in that** the air inlet and extraction openings (5, 6) are mounted in two opposing walls (W5, W6) of the room (1).

12. Arrangement according to either of claims 10 and 11, **characterised in that** the openings (5, 6) are provided with horizontally extending slats to divide up a stream of air (LE, LA).

13. Arrangement according to one of preceding claims 10 to 12, **characterised in that** the extractions openings (6) are fitted with fans of single-entry design whose impeller vanes are curved backwards.

14. Arrangement according to one of preceding claims 10 to 13, **characterised in that** the fans are fitted, on the axis of the impeller, with motors which are directly driven electrically.

15. Arrangement according to one of preceding claims 10 to 14, **characterised in that** the air-conditioning system (7) is set up as a separate closed system in one or more containers (4) which can be placed in the vicinity of the room (1) and which can be connected to the inlet and extraction openings (5,6) by means of air ducts.

16. Arrangement according to one of preceding claims 10 to 15, **characterised in that** the room (1) is fitted with sensors for sensing the most important parameters of the air (LE, LA), but at least its temperature and humidity, at least in the vicinity of an entry (E) and exit (A) for the carcasses (K), and the sensors report the parameters which are sensed to the air-conditioning system (7).

17. Arrangement according to one of preceding claims 10 to 16, **characterised in that** the air-conditioning system (7) has a control or regulating system for the treatment of the air (LE, LA) which is able to receive signals from sensors in the room (1).

18. Arrangement according to one of preceding claims 10 to 17, **characterised in that** the inlet and extraction openings (5, 6) are of a height which approximately corresponds to the length of the carcasses (K) and are of a width which is greater than the expected width of a carcass (K) when suspended from the overhead conveyer (S1 - S11).

19. Use of a room (1) set up as a drip-draining zone in a slaughterhouse (2) by the insertion or mounting of inlet and extraction openings (5, 6) in or on two opposing enclosing walls (W5, W6) which are arranged substantially transversely to the entry (E)/exit (A) for the carcasses (K), and by the coupling of the openings (5, 6) to an air-conditioning system (7) for producing a horizontally directed stream of air (LE, LA) transversely to slaughtered animal carcasses (K) which are transported through the room (1) in a suspended state.

20. Use according to claim 19, **characterised in that** the inlet and extraction openings (5, 6) are arranged opposite one another.

## Revendications

1. Procédé de traitement de carcasses d'animaux abattus au moyen d'un courant d'air pendant leur transport par un convoyeur suspendu après l'étripage et avant la pesée dans un abattoir, **caractérisé en ce que** de l'air conditionné (LE, LA) est envoyé horizontalement par aspiration autour des carcasses (K) à des vitesses allant de 1,5 à 6 m/s dans un local séparé (1).

2. Procédé selon la revendication 1, **caractérisé en ce que** les carcasses sont transportées par le courant d'air (LE, LA) dans une ligne d'égouttage (1) de l'abattoir (2) en décrivant des méandres dans une pluralité de rangées (S1 -S11) en passant à plusieurs reprises devant des orifices d'entrée d'air et de sortie d'air (5, 6).

3. Procédé selon la revendication 1 ou 2, **caractérisé en ce que** les orifices d'aération sont ouverts jusqu'à environ 60 % à 100 % de la longueur étendue des carcasses (K) pour que l'air (LE, LA) circule autour des carcasses (K) .

4. Procédé selon l'une quelconque des revendications précédentes, **caractérisé en ce que** l'air aspiré (LA) est filtré, déshumidifié et refroidi avant d'être ramené aux orifices d'entrée d'air (5).

5. Procédé selon l'une quelconque des revendications précédentes, **caractérisé en ce que** l'air aspiré (LA) est utilisé pour réchauffer l'eau non potable de l'abattoir (2) au moyen d'un échangeur de chaleur.

6. Procédé selon l'une quelconque des revendications précédentes, **caractérisé en ce que** l'air aspiré (LA) est acheminé à travers le filtre pour extraire par filtration des germes pathologiques se fixant éventuellement sur la viande fraîche et/ou contenus dans les aérosols et/ou dans l'air dans la ligne d'égouttage (1).

7. Procédé selon l'une quelconque des revendications précédentes, **caractérisé en ce que** la température des carcasses (K) et/ou leur température ambiante à proximité d'un orifice d'amenée (E) de la ligne d'égouttage (1) pour de telles carcasses (K) est détectée, éventuellement mémorisée et comparée à une température similaire à proximité de l'orifice d'évacuation (A) de la ligne d'égouttage (1) et la différence est utilisée comme grandeur de réglage pour le conditionnement de l'air (LA).

8. Procédé selon l'une quelconque des revendications précédentes, **caractérisé en ce que** la vitesse de l'air côté aspiration est commandée de sorte qu'une augmentation de la température de l'air de 2 à 15 Kelvin entre l'entrée d'air (5, LE) et la sortie d'air (6, LA) soit réglée au maximum.

9. Procédé selon l'une quelconque des revendications précédentes, **caractérisé en ce que** la température de l'air aspiré (LA) est traitée de sorte qu'elle atteigne au moins 12°C, de préférence 14 - 16°C sur le côté d'entrée d'air (5, LE).

10. Dispositif de traitement de carcasses d'animaux abattus transportées par un convoyeur suspendu après l'étripage et avant la pesée dans un abattoir dans un local séparé, **caractérisé en ce que** le convoyeur suspendu peut être guidé en décrivant des méandres dans des voies parallèles (S1 - S11) transversalement aux orifices d'aspiration (6) et aux orifices d'entrée (5) orientés horizontalement pour l'air et les orifices d'entrée et d'aspiration (5, 6) sont reliés par une installation de climatisation (7), agencée à l'extérieur du local (1), servant à déshumidifier et à refroidir l'air (LA) aspiré hors du local (1).

11. Dispositif selon la revendication 10, **caractérisé en ce que** les orifices d'entrée et d'aspiration (5, 6) sont ménagés sur deux parois (W5, W6) opposées l'une à l'autre du local (1).

12. Dispositif selon l'une quelconque des revendications 10-11, **caractérisé en ce que** les orifices (5, 6) destinés à diviser un courant d'air (LE, LA) sont pourvus de lamelles s'étendant horizontalement.

13. Dispositif selon l'une quelconque des revendications 10-12, **caractérisé en ce que** les orifices d'aspiration (6) sont équipés de ventilateurs dans une réalisation à aspiration unilatérale, ventilateurs dont les pales sont courbées vers l'arrière.

14. Dispositif selon l'une quelconque des revendications 10-13, **caractérisé en ce que** les ventilateurs sont équipés sur l'essieu de la roue de moteurs entraînés directement électriquement.

15. Dispositif selon l'une quelconque des revendications 10-14, **caractérisé en ce que** l'installation de climatisation (7) est conçue comme un système fermé séparé dans un ou plusieurs contenants (4) pouvant être placés à proximité du local (1) et pouvant être reliés au moyen de conduites d'air menant aux orifices d'entrée et d'aspiration (5, 6).

16. Dispositif selon l'une quelconque des revendications 10-15, **caractérisé en ce que** le local (1) est équipé au moins à proximité d'une entrée (E) et d'une sortie (A) pour les carcasses (K) de capteurs destinés à détecter les paramètres les plus importants de l'air (LE, LA), mais au moins leur température et leur humidité, et les capteurs signalisent les paramètres détectés sur l'installation de climatisation (7).

17. Dispositif selon l'une quelconque des revendications 10-16, **caractérisé en ce que** l'installation de climatisation (7) comprend une installation de commande ou de régulation servant au traitement de l'air (LE, LA) et pouvant recevoir les signaux provenant des capteurs dans le local (1).

18. Dispositif selon l'une quelconque des revendications 10-17, **caractérisé en ce que** les orifices d'entrée et d'aspiration (5, 6) présentent une hauteur correspondant sensiblement à la longueur du tronc des carcasses (K) et une largeur supérieure à la largeur escomptée du tronc (K) suspendu sur le convoyeur suspendu (S1 - S11).

19. Utilisation d'un local (1) agencé sous la forme d'une ligne d'égouttage dans un abattoir (2) et dans lequel des orifices d'entrée et d'aspiration (5, 6) sont ménagés ou montés sur deux murs d'enceinte (W5, W6) opposés l'un à l'autre et disposés sensiblement transversalement à l'entrée(E)/à la sortie (A) pour les carcasses (K) et les orifices (5, 6) sont accouplés à une installation de climatisation (7) pour produire un courant d'air (LE, LA) orienté horizontalement, transversalement à des carcasses d'animaux abattus (K) transportées et en suspension à travers le local (1).

20. Utilisation selon la revendication 19, **caractérisée en ce que** les orifices d'entrée et d'aspiration (5, 6) sont disposés à l'opposé l'un de l'autre.
